Europäisches Patentamt

European Patent Office

Office européen des brevets

(11) Publication number: **0 200 489**
**A2**

(12) **EUROPEAN PATENT APPLICATION**

(21) Application number: 86303125.8

(22) Date of filing: 24.04.86

(51) Int. Cl.⁴: **A01B 15/14**

(30) Priority: 24.04.85 GB 8510428

(43) Date of publication of application:
10.12.86 Bulletin 86/45

(84) Designated Contracting States:
**DE FR GB NL SE**

(71) Applicant: **RANSOMES SIMS & JEFFERIES, PUBLIC LIMITED COMPANY**
**Nacton Works**
**Ipswich IP3 9QG Suffolk(GB)**

(72) Inventor: **Hawes, Richard John**
**42 Woodthrope Road Hadleigh**
**Ipswich Suffolk IP7 5HZ(GB)**

(74) Representative: **Garratt, Peter Douglas et al**
**Mathys & Squire 10 Fleet Street**
**London EC4Y 1AY(GB)**

(54) **Reversible plough.**

(57) A reversible plough has a main link extending between the reversing spindle and the plough beam. A first adjustable link extends between the reversing spindle and the main link and a second adjustable link extends between the main link and the plough beam. Means such as a double-threaded screw member, a crank or hydraulically linked cylinders are provided for adjusting the effective lengths of the two links in tandem so as to shift the plough beam laterally to adjust the front furrow width without affecting the pulling position. In a modification for use on variable furrow width ploughs, the first adjustable link is connected not to the reversding spindle but to a lever which is rotatable coaxially with the main link. Rotation of the lever then provides for adjustment of the general furrow width as an alternative to the above described adjustment of the front furrow width only. In either case, independent adjustment of the effective length of one of the adjustable links provides control over the pulling position.

FIG.3

# REVERSIBLE PLOUGH

This invention relates to reversible ploughs and is particularly concerned with adjustment of the position of the plough frame relative to the headstock.

More particularly, the invention relates in one aspect to a reversible plough comprising a headstock adapted for connection with a tractor three-point linkage; a reversing spindle mounted in the headstock for rotation about a fore and aft reversing axis; a plough frame carrying right-handed and left-handed plough bodies; a main link connected at one end with the reversing spindle and at the other end with the plough frame, the main link carrying the majority of the bending, torsion and draft loads transmitted between the headstock and the plough frame; and means for displacing the plough frame relative to the headstock for adjustment of the front furrow width.

It is an object of this invention to provide an improved reversible plough having a simple and reliable mechanism for adjusting the front furrow width which is suitable for manual operation or for powered operation enabling adjustment to be made on the move. To reduce the size and cost of the power device needed to operate the adjustment whilst ploughing, it is necessary for the force carried by the mechanism to be small. This can be achieved by ensuring that the plough frame is moved laterally with substantially no fore and aft movement, since the resistance to lateral movement of a plough in use is considerably less than the resistance to fore and aft movement. If power requirements are to be kept low, it will additionally be necessary to maintain low friction despite the high bending and torsion loads that will be encountered. It is a further object to enable the front furrow width to be adjusted without affecting the pulling position of the plough.

Accordingly, the present invention is in one form characterised in that said means comprises first adjustable link means acting between the reversing spindle and the main link and second adjustable link means acting between the main link and the plough frame and adjustment means adapted to adjust the effective length of said link means in tandem so that the plough frame is shifted laterally of the headstock with substantially no rotational movement.

Advantageously, the front furrow adjusting means operates to maintain constant the ratio of the effective lengths of the first and second adjustable link means.

Preferably, the front furrow adjusting means comprises a crank pivotally mounted on the main link, each said adjustable link means being connected at one end thereof to said crank, and an actuator serving to pivot the crank relative to the main link to adjust the front furrow width.

Suitably, the point of connection between the second adjustable link means and the plough frame is spaced forwardly of the point of connection of the main link and the plough frame.

In one form of the invention, the plough frame comprises an inclined beam carrying the plough bodies, with a laterally extending support member formed intermediate the length of the beam, wherein the main link is connected to the support member and wherein said second adjustable link means is connected to the plough beam forwardly of the support member.

In another aspect the present invention relates to a reversible plough comprising a headstock adapted for connection with a tractor three-point linkage; a reversing spindle mounted in the headstock for rotation about a fore and aft reversing axis; a plough beam; a plurality of leg mounting brackets pivotally supported on the plough beam for rotation about a vertical axis; an alignment member extending generally parallel to the plough beam and pivotally interconnected with said leg mounting brackets to maintain the relative alignment thereof; a plurality of plough legs each carrying a right-handed and a left-handed plough body and supported on the respective leg mounting brackets; a main link connected at one end with the reversing spindle and at the other end with the plough frame, the main link carrying the majority of the bending, torsion and draft loads transmitted between the headstock and the plough frame and an alignment link extending generally parallel with the main link and connected at one end with the reversing spindle and at the other end with the plough frame and means for rotating the main link relative to the reversing spindle such that the inter-body furrow width and the front furrow width are adjusted by substantially equal amounts.

It is an object of this aspect of the invention to provide an improved reversible plough in which the front furrow width can be adjusted either in conjunction with an adjustment of the inter-body furrow width or independently.

Accordingly, the present invention in this form is characterised in that there is provided an adjustment lever connected to the reversing spindle for rotation coaxially with the main link; first adjustable link means acting between the lever and the main link; second adjustable link means acting between the main link and the plough beam; front furrow adjusting means adapted to adjust said link means in tandem so that the plough frame is shifted laterally with substantially no rotational movement and general furrow width adjusting means adapted to rotate said adjusting lever relative to the reversing spindle so that the plough beam is rotated to adjust the inter-body furrow width and the front furrow width in substantially equal amounts.

The invention will now be described by way of example with reference to the accompanying drawings in which:-

Figure 1 is a somewhat diagrammatic view of a reversing plough according to this invention, connected to a tractor three-point linkage;

Figure 2 is a part view of one embodiment of a plough operating in accordance with the principles illustrated in Figure 1;

Figure 3 is a part view of a further embodiment of a plough operating in accordance with the principles illustrated in Figure 1;

Figure 4 is a view similar to Figure 1 showing a different adjustment;

Figure 5 is a sketch illustrating yet a further embodiment of this invention;

Figure 6 is a part view of an embodiment of this invention permitting in work adjustment of inter-body furrow width; and

Figure 7 is a view similar to Figure 6 showing the effect of an adjustment.

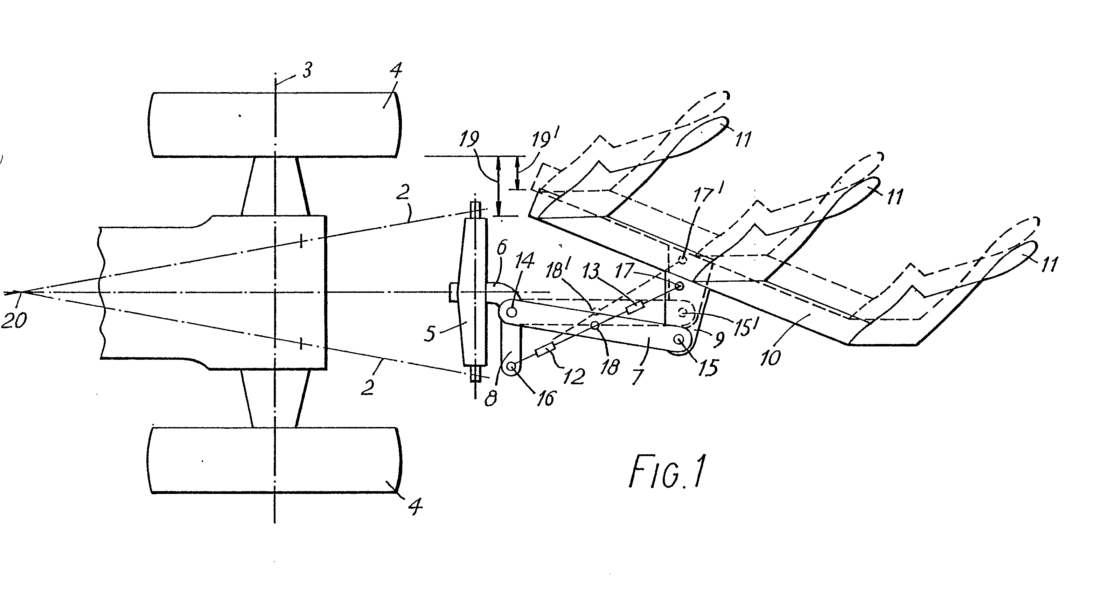

Referring to Figure 1, a tractor 1 shown partly in outline has lower links 2 of a conventional three-point linkage. The rear axle 3 is shown carrying rear wheels 4. The tractor lower links 2 are pinned to opposite ends of a plough headstock 5 in which is mounted the reversing spindle 6. The reversing spindle 6 is mounted in bearings in the headstock for rotation about a fore and aft reversing axis between right-handed and left-handed ploughing positions, as is conventional.

A substantial main link 7 is pivotally connected at its forward end to an arm 8 formed as an integral lateral extension of the reversing spindle. At its rearward end, the main link 7 is pivotally connected to a support member 9 which is rigidly connected with the inclined plough beam 10. The main link 7 is adapted to carry the majority of the bending, torsion and draft loads transmitted between the headstock and the plough frame. In conventional manner, right-handed and left-handed plough bodies 11 are mounted on the plough beam 10.

An adjustable link 12 is pinned to the arm 8 at a point 16 and to the main link 7 at a point 18. A further adjustable link 13 is pinned to the main link 7 at the same point 18 and to the support arm 9 at a point 17. The arrange ment is such that the triangles defined by the points 14,16, 18 and by the points 15, 17 and 18 are similar. To alter the furrow width 19 without introducing a rotation of the plough frame and thereby a shift in the effective pulling position 20 defined by the intersection of lines drawn through the lower links 2, it is necessary to adjust the plough frame laterally whilst maintaining parallelism with the original beam position. This is achieved by adjusting links 12 and 13 in tandem by respective amounts which keep the triangles 14, 16, 18 and 15, 17, 18 similar. In other words the ratio of the length of links 12 and 13 is maintained constant. If the links 12 and 13 are originally of equal length, this condition is satisfied by extending or retracting both links in tandem by the same amount.

The dotted outline in Figure 1 shows the effect of adjusting links 12 and 13 in the described manner; the furrow width 19 reduces to 19' with no significant movement of the effective pulling position 20.

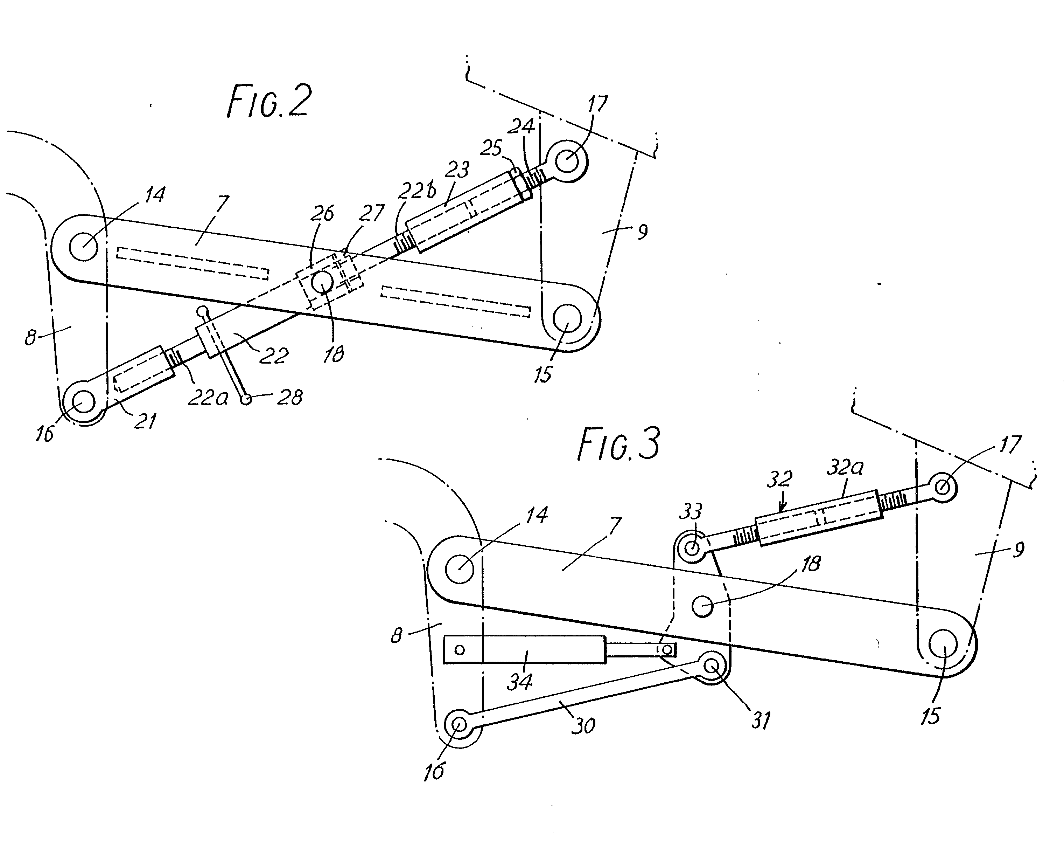

Referring now to Figure 2, there is shown a manual adjustment mechanism, which is capable of adjusting the links 12 and 13 in the required manner. In this Figure and throughout the drawings, parts corresponding to those shown in Figure 1, retain the same reference numerals.

A connector 21 has a female right-handed screw thread and is pivotally connected at a point 16 to the reversing spindle extension 8. A rod 22 has at one end an integral threaded portion 22a which engages within the female thread of the connector 21. At the opposite end of the rod 22 there is formed an integral left-handed screw thread portion 22b which engages within a turnbuckle 23. This turnbuckle 23 in turn engages a right-handed eye bolt 24 with a lock nut 25 capable of locking the position of the turnbuckle 23 relative to the eye bolt 24. The eye bolt 24 is pivotally mounted to the support arm 9 at point 17. A trunion block 26 is pivotally mounted at point 18 to the main link 7. The left-handed thread portion 22b of the rod 22 passes through the trunion block and receives a nut 27 such that the rod 22 is capable of rotation with the trunion block 26 but substantially held against axial movement.

The distances between the points 16 and 18 and between 18 and 17 are equal so that equal extensions or retractions of the links are required to preserve similar triangles. The pitch of the right hand and left hand thread portions on the rod 22 are equal so that a manual rotation of the rod 22 through tommy bar 28 will change the distance between points 16 and 18 by the same amount as the distance between 17 and 18. It will be understood that if the nominal lengths of the links 12 and 13 were different, similar triangles could -within limits -be preserved by the use of different pitch threads on opposite ends of the rod 22.

A further embodiment of this invention will now be described with reference to Figure 3. A crank 29 is pivotally mounted on the main link 7 at the point 18. A fixed length link 30 is pivotally connected to the arm 8 at the point 16 and is pivotally connected to one limb of the crank 29 at a point 31. An adjustable length link 32, incorporating a turnbuckle, is pivotally connected to the opposite limb of the crank 28 at a point 33 and is pivotally connected to the support member 9 at the point 17. A hydraulic actuator 34 is connected between the arm 8 and the crank 29 and is operable to rotate the crank 29 about the axis 18. As with the previous embodiment, the triangles 15, 17, 18 and 14, 16, 18 are arranged to be similar and in order to ensure that this geometry is maintained throughout the range of adjustment, the triangles formed by the points 17, 18, 33 and 16, 18, 31 are also arranged to be similar.

In operation, the hydraulic actuator 34 can be used -with the plough either in use or at rest -to rotate crank 29 and thereby shift the plough beam laterally of the tractor with substantially no rotation. It can be seen that in this movement the ratio of the distances between points 16 and 18 and between points 18 and 17 is maintained constant and, in the embodiment as drawn, equal to unity. The distance between the points 16 and 18 may be regarded as the effective length of the adjustable link means formed by fixed link 30 and one limb of crank 29. Similarly, the distance between points 17 and 18 may be regarded as the effective length of link means formed by adjustable link 32 and the opposite limb of crank 29. It will be understood that other means could be employed for rotating the crank 29, those means acting optionally between the crank 29 and the arm 8, the main link 7 or the support member 9.

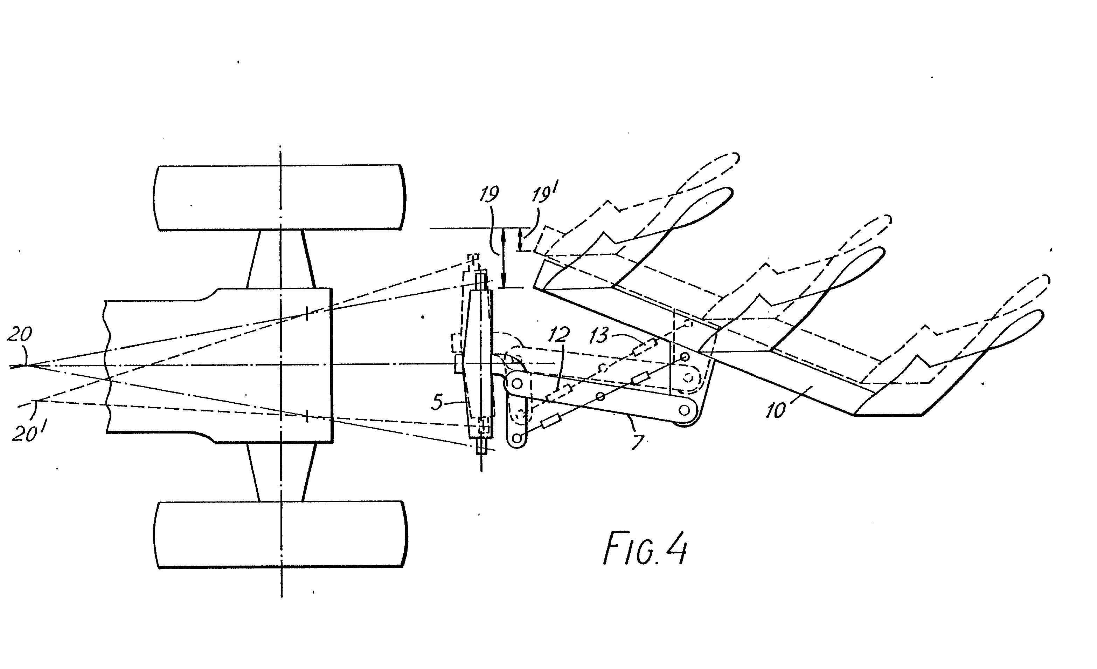

In certain circumstances, it may be desired to adjust the pulling position 20. This may be because there is an unwanted steering reaction on the tractor or because the plough bodies are not running in the correct orientation through the ground. This adjustment may be achieved by altering the length of either, but not both, of the links 12 and 13. The effect of altering just one of these links is to rotate the plough beam relative to the headstock 5. The bodies will tend to maintain their alignment in the ground and the lower links 2 are therefore displaced laterally at their rear end until the headstock has rotated an amount equal to the original adjustment thus both reducing the furrow width 19 and moving the effective pulling position 20. This adjustment is illustrated in Figure 4 where the position shown in dotted outline is the result of adjusting one link only. In the embodiment shown in Figure 2, adjustment of one link can be achieved through turnbuckle 23 after releasing lock nut 25. In the embodiment of Figure 3, the necessary adjustment can be achieved through adjustable link 32.

It will be understood that this described adjustment of the pulling position carries with it an adjustment of the front furrow width which may be unwanted. Any such unwanted change in front furrow width can be compensated by an adjustment of both links in tandem as described above.

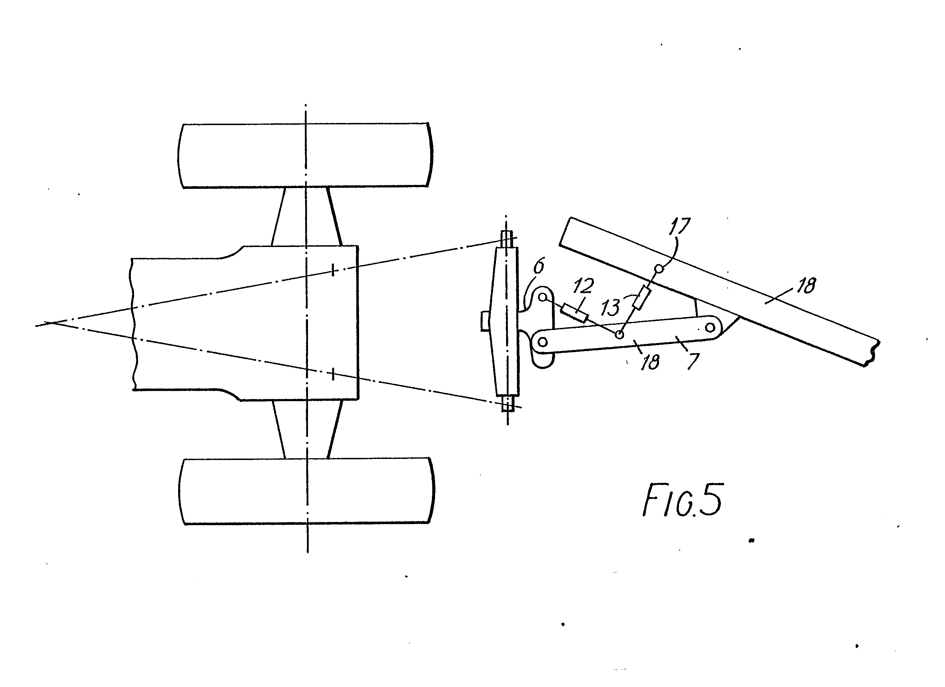

In a modification, means other than the described threaded rod or pivoted crank can be used for adjusting links 12 and 13 in tandem. The links may thus include respective hydraulic cylinders connected in a suitable fluid circuit such that the correct ratio of lengths is at all times maintained. In a more radical modification, the two adjustable link means are provided on the same side of the main link with the adjustment in tandem comprising the extension of one link means and the related retraction of the other link means. These particular modifications are illustrated in diagrammatic form in Figure 5 where the reversing spindle 6 is T-shaped and the main link 7 and adjustable link means 12 are connected to opposite ends of the cross piece of the T. Adjustable link means 13 are connected between common point 18 in the main link 7 and forward connection point 17 in the plough frame. It will be appreciated, however, that links 12 and 13 need not be connected to the main link 7 at the same point.

The two links 12 and 13 comprise hydraulic cylinders connected in a suitable fluid control system so that retraction, say, of cylinder 12 is automatically accompanied by an extension of cylinder 13 necessary to ensure bodily lateral movement of the plough frame 10. With appropriate geometry, and equal nominal lengths of the cylinders 12 and 13, the extension of one link will be accompanied by an equal retraction of the other link, this involving very simple control circuitry. More sophisticated control can be applied to deal with other geometries and the manner in which this is arranged will be evident to the skilled man.

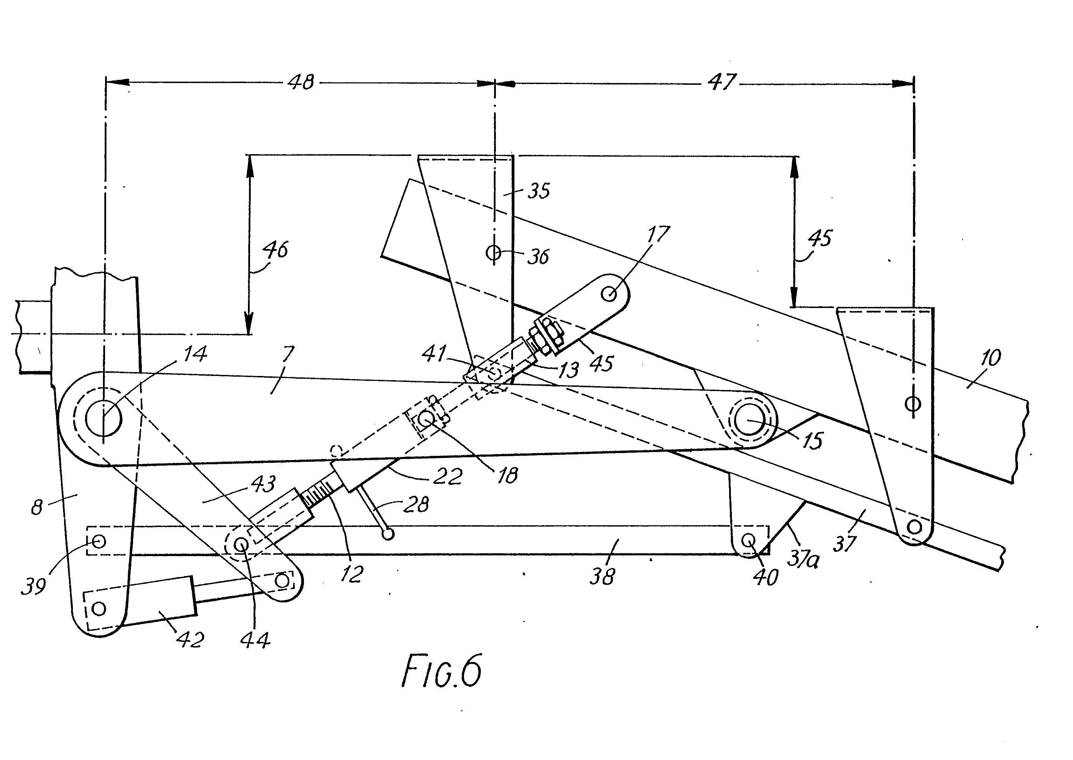

Referring now to Figure 6, the plough beam 10 carries a series of leg mounting brackets 35 which are each freely pivotable relative to the plough beam about a vertical axis 36. A control or alignment member 37 extends parallel to the plough beam and is pivotally interconnected at 41 with the brackets 35 such that the brackets, plough beam and alignment member form a series of parallelograms.

The main link 7, as with the previous embodiments, is pivotally connected to the plough frame at the point 15 and the reversing spindle extension 8 at the point 14. An alignment link 38, which extends parallel to the main link, is pivotally connected at point 40 to a support flange 37a on the alignment member 37 and pivotally connected at point 39 to the reversing spindle extension 8. The geometry of the described arrangement is such that the points 14, 15, 39 and 40 form a parallelogram as do the points 36, 41, 15 and 40.

An adjustment lever 43 is pivotally mounted on the spindle extension 8 for rotation about the point 14. Between the free ends of the lever 43 and the spindle extension 8, there is connected a hydraulic actuator 42. A double-threaded arrangement analogous to that shown in Figure 2 at reference numerals 21 to 28 is pivotally connected to the main link 7 through trunion 26. The connector 21 is pinned to the lever 43 rather than directly to the spindle extension 8 whilst the eye bolt 24 is replaced by a support flange 45 which is pinned to the plough beam at point 17 rather than the support member 9 as shown in Figure 2.

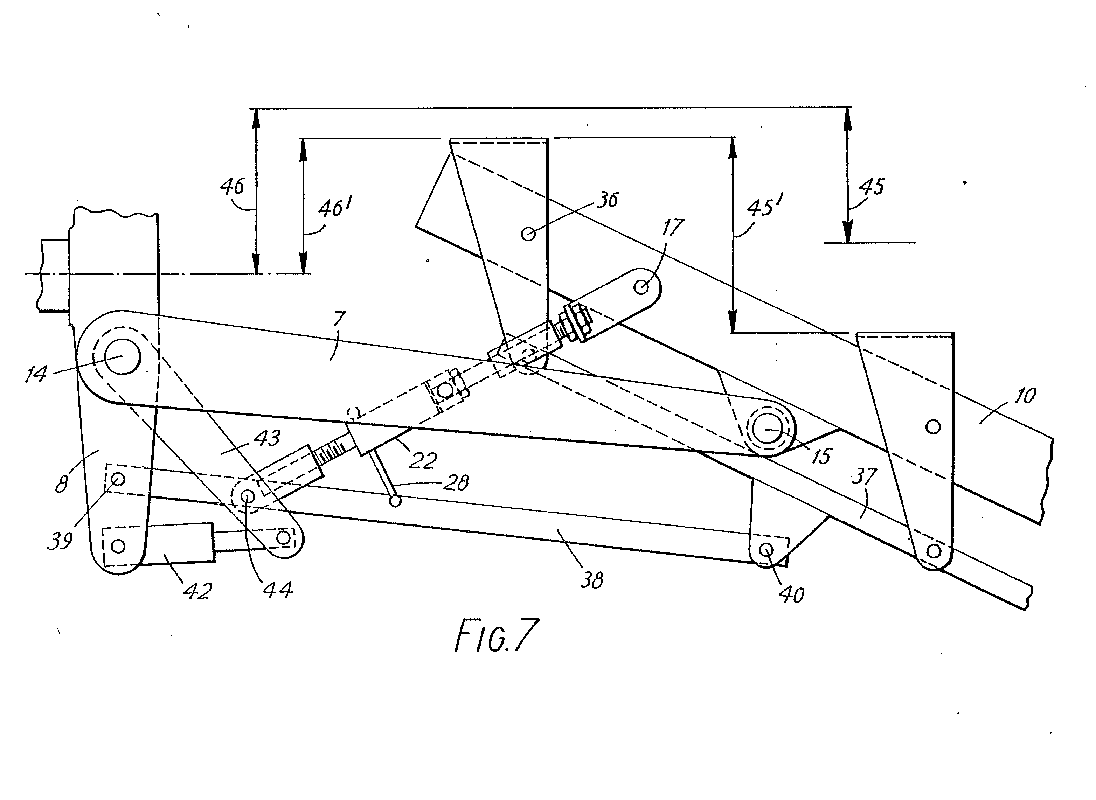

It will be understood that with no relative adjustment of the links 12 and 13, the plough beam is maintained rigid with the main link 7 so that operation of the actuator 42 serves to rotate the beam and the link about the point 14. The effect of the alignment member 37 and the alignment link 38 is to ensure that, in this rotation, the orientation of the leg mounting brackets 35 remains unchanged and a position is reached such as that illustrated in Figure 7 where the inter-body furrow width has been increased from the dimension shown at 45 to the dimension shown at 45'. The clockwise rotation about point 14 which causes this increase in the inter-body furrow width will also reduce from the dimension 46 to the dimension 46' the lateral offset of the front leg from the reversing axis and so increase the front furrow width. The amount by which the lateral offset of the front leg changes on rotation about the point 14 will of course be determined by the fore and aft distance 48 between the point 14 and the front leg. It is preferred that the dimension 48 is approximately equal to the fore and aft distance 47 between adjacent leg bracket mounting points 36 so that the change in front furrow width is equal to the change in the inter-body furrow width.

If it is desired to change the front furrow width only, the lengths of adjustable links 12 and 13 are adjusted in the manner described above with reference to Figure 2. Similarly, adjustment of the pulling position can be achieved by adjusting the length of link 13 only.

The mechanism shown in Figure 3 and Figure 5 can similarly be modified for use in a plough having in-work furrow adjustment means. This form of the present invention provides in a particularly simple fashion the three separate adjustments that are required. These are simultaneous adjustment of front and inter-body furrow width, adjustment of front furrow width only and adjustment of pulling position. The first adjustment is the one most likely to be made during ploughing operations and is usefully achieved through a hydraulic actuator as described.

It will be noted that the mechanism shown in Figure 6 has the additional benefit as compared with the mechanism of Figure 2 that connection point 17 now lies on the plough beam and the lateral extent of the support member 9 is significantly reduced. Since support member 9 is one of the principal structural elements of the plough frame, any reduction in its length offers significant benefits. A smilar advantage may be secured with the arrangement of Figure 2 by angling rearwardly the reversing spindle extension 8 relative to the spindle 6 itself. As with other described embodiments, the reversing spindle extension need not form an integral part of the spindle and might in practice comprise a small sub-frame fixed for rotation with the reversing spindle and providing the necessary link connection points.

**Claims**

1. A reversible plough comprising a headstock adapted for connection with a tractor three-point linkage; a reversing spindle mounted in the headstock for rotation about a fore and aft reversing axis; a plough frame carrying right-handed and left-handed plough bodies; a main link connected at one end with the reversing spindle and at the other end with the plough frame, the main link carrying the majority of the bending, torsion and draft loads transmitted between the headstock and the plough frame; and means for displacing the plough frame relative to the headstock for adjustment of the front furrow width, characterised in that said means comprises first adjustable link means (12) acting between the reversing spindle (6,8) and the main link (7) and second adjustable link means (13) acting between the main link (7) and the plough frame - (10) and adjustment means (21-28) adapted to adjust the effective length of said link means in tandem so that the plough frame is shifted laterally of the headstock with substantially no rotational movement.

2. A plough according to Claim 1, wherein said adjusting means operates to maintain constant the ratio of the effective lengths of the first and second adjustable link means.

3. A plough according to Claim 1 or Claim 2, wherein the adjusting means comprises a crank - (29) pivotally mounted on the main link (7), each said adjustable link means (12,13) being connected at one end thereof to said crank and at the respective other end to the reversing spindle or plough frame, and an actuator (34) serving to pivot the crank relative to the main link to adjust the front furrow width.

4. A plough according to any one of the preceding claims, wherein the triangle defined by the ends of the first adjustable link means (16,18) and the point (14) of the interconnection between the main link - (7) and the reversing spindle (6,8) is similar with the triangle defined by the ends of the second adjustable link means (18,17) and the point (15) of interconnection between the main link and the plough frame.

5. A plough according to any one of the preceding claims, wherein the point (17) of connection between the second adjustable link means (13) and the plough frame (10) is spaced forwardly of the point of connection (15) of the main link and the plough frame.

6. A plough according to Claim 5, wherein the plough frame comprises an inclined beam carrying the plough bodies, with a laterally extending support member (9) formed intermediate the length of the beam, the main link (7) being connected to the support member (9) and the second adjustable link means (13) being connected to the plough beam - (10) forwardly of the support member.

7. A reversible plough comprising a headstock adapted for connection with a tractor three-point linkage; a reversing spindle mounted in the headstock for rotation about a fore and aft reversing axis; a plough beam; a plurality of leg mounting brackets pivotally supported on the plough beam for rotation about a vertical axis; an alignment member extending generally parallel with the plough beam and pivotally interconnected with said leg mounting brackets to maintain the relative alignment thereof; a plurality of plough legs each carrying a right-handed and a left-handed plough body and supported on the respective leg mounting brackets; a main link connected at one end with the reversing spindle and at the other end with the plough frame, the main link carrying the majority of the bending, torsion and draft loads transmitted between the headstock and the plough frame and an alignment link extending generally parallel with the main link and connected at one end with the reversing spindle and at the other end with the plough frame and means for rotating the main link relative to the reversing spindle such that the inter-body furrow width and the front furrow width are adjusted by substantially equal amounts, characterised in that there is provided an adjustment lever (43) connected to the reversing spindle for rotation coaxially with the main link; first adjustable link means (12) acting between the lever (43) and the main link (7); second adjustable link means (13) acting between the main link (7) and the plough beam (10); front furrow adjusting means (21-28) adapted to adjust said link means in tandem so that the plough frame is shifted laterally with substantially no rotational movement and general furrow width adjusting means adapted to rotate said adjusting lever (43) relative to the reversing spindle (8) so that the plough beam is rotated to adjust the inter-body furrow width and the front furrow width in substantially equal amounts.

8. A plough according to any one of the preceding claims wherein the first and second adjustable link means comprise a common threaded member - (22,22a,22b) engaging respective mating parts - (21,23) such that rotation of the common part effects adjustment of the effective length of said link means in tandem.

9. A plough according to Claim 8, wherein the mating parts are formed with threads of respective opposite hands.

10. A plough according to any one of the preceding claims, wherein means (23,24,25) are provided for separate adjustment of the effective length of one of said adjustable link means in order to adjust the pulling position of the plough.

FIG.1

0 200 489

FIG.2

FIG.3

19  19'

20

20'

12  13

5

7

10'

0 200 489

FIG.4

FIG.5

0 200 489

FIG.6

FIG.7

0 200 489